# EUROPEAN PATENT SPECIFICATION

(11) **EP 2 258 157 B1**
(45) Date of publication and mention of the grant of the patent: **09.05.2012**
(21) Application number: 10164983.8
(22) Date of filing: 04.06.2010
(51) Int. Cl.: A01C 5/06, A01C 7/20, A01B 49/06, A01B 19/02

(54) **Soil preparation tool**
Bodenvorbereitungsmaschine
Outil de préparation du sol

(30) Priority: 04.06.2009 DK 200900703
(43) Date of publication of application: 08.12.2010
(73) Proprietor: Kaastrup, Søren, 7870 Roslev (DK)
(72) Inventor: Kaastrup, Søren, 7870 Roslev (DK)
(74) Representative: Nielsen, Leif

(56) References cited:
- DE-B- 1 016 044
- DE-U1- 20 100 098
- FR-A- 615 600
- JP-A- 2007 000 013

## Description

### Field of the Invention

The present invention concerns a soil working tool with a frame having coupling means for a work vehicle, and which supports a number of harrow tines, at which every harrow tine is mounted in the frame via a holder which includes a beam secured to the frame, and which includes a parallelogram with four parallelogram sides that are mutually articulated, and a mounting fitting fastened at a lower parallelogram side, at which an upper parallelogram side is constituted by a part of the beam, at which a lower parallelogram side is largely horizontal in use, and at which the lower parallelogram side is mounted in two parallelogram sides, wherein the lower parallelogram side further supports a roller, and wherein the harrow tine has at least one work position where a lower point of the harrow tine is located in a horizontal harrowing plane which is under a horizontal surface plane of the lowermost point of the roller.

The invention furthermore concerns an integrated solution where the soil preparation tool is used for direct sowing as the tool further includes:
- a hopper for seed corn;
- a seed pipe leading seed corns to an outlet disposed immediately after the harrow tine; and
- a roller closing the seed bed.

The tool further includes a compacting roller or a drum which may be disposed before or after the parallelogram suspension relative to the driving direction.

### Background of the Invention

Soil working tools for different purposes have been known fro a long period of time, beginning with simple hand-operated tools to specialised and industrialised tools.

Reduced soil working has its greatest advantage in that the seed bed is prepared by fewer run-overs of the soils than by traditional soil working.

Ploughing is frequently omitted and, though depending on soil conditions and seed, there are different advantages of integrating soil preparation such that the desired seed bed is achieved by fewer work operations, or ideally by just one work operation. Reduced soil preparation is often constituted by harrowing and sowing being performed in the same work operation.

In the first instance, the soil working machine is to be of simple design by which material is saved and simple operation with a minimum of wear and thereby minimum service is ensured.

By traditional machines, the weight of the soil working machine itself has been of significance in order to ensure sufficient depth and uniformity of the seed bed.

An example of a soil working tool of the type indicated in the introduction is known from JP 2007000013. Herein is described a design in which the parallelogram sides connecting the upper and lower parallelogram sides are directed downwards and rearwards relative to the driving direction. In order to press the harrow tines against the soil surface by pulling the soil working tool in the driving direction, there is mounted a spring between two swivel arms constituting the parallelogram sides connecting upper and lower parallelogram sides. Hereby, there is a risk that the spring does not provide a correct and uniform working depth for the harrow tines if the soil has varying hardness. The work depth will depend on the spring force.

### Object of the Invention

It is the object of the invention to prepare the soil by harrowing, preferably for forming a seed bed for direct sowing without using unnecessary weight or springs, and such that the soil working machine prepares a seed bed with uniform sowing depth and with a nature providing good connection between the soil and the seed corns.

The soil working machine is furthermore to provide a suitable subsequent covering of the seed in one and the same work operation.

### Description of the Invention

According to the present invention, this is achieved by a tool of the kind specified in the introduction which is peculiar in that the two parallelogram sides are directed obliquely upwards and rearwards in relation to the driving direction of the soil working tool.

The harrow tine of the soil working tool is drawn in the driving direction, causing the harrow tine to tend to digging itself into the soil. This tendency is balanced by the roller at the rear on the lower side of the parallelogram. Also, it is ensured that a uniform harrowing depth is produced which in turn provides the best base for an optimised yield.

A disc cutter can be mounted in the parallelogram in the structure. Hereby the harrow tine is used for drawing the disc cutter down into a desired working depth. Even if it is preferred that a separate roller is used together with the harrow tine and the disc cutter, this embodiment may be designed such that the disc cutter performs the depth regulating. Hereby it may be said that the disc cutter constitutes a roller.

The parallelogram and its position relative to the driving direction provide that the pulling force causes the harrow tine to dig into the soil, thus saving weight devices that otherwise should have been applied for pressing the harrow tine down into the soil to ensure that the harrow tine works in the soil at a certain given depth.

In the first instance there is used a roller with a circular cross-section and with a certain width preventing it from digging into the soil. However, it is not only such that the invention uses a roller in that a wheel may also find application as well as any circular shape would be obvious to use.

However, it may be envisaged that it may be advantageous to substitute the roller or wheel by an edged profile, as e.g. a polygon, the edges of which can be used for defining distances on the soil surface. This may be advantageous by laying seed corns where the position of each single corn/seed is of significance, that either being the position itself which is to be undisturbed, or because water or fertiliser is only to be applied immediately over each corn/seed.

Irrespective it being a roller, a wheel or another form, the disposition of the roller or similar at rear of the harrow tine is peculiar since this primarily ensures that the depth of the soil work becomes uniform.

Also, in some cases it will be advantageous if markers are provided at the periphery of the roller which, as the roller or wheel is drawn forward, leaves marks in the soil surface.

Furthermore, the roller, wheel or other chosen profile may close the hole caused by the harrow tine. In that connection is to be mentioned that the roller in the first instance has a uniform profile, but it may be advantageous with edges provided along the roller, the edges suitably closing or covering the hole formed by the harrow tine.

The preferred embodiment of the harrow tine is with a downwardly and forwardly directed sharp edge or point, and with either a circular or rectangular cross-section. The shape of the cross-section may, however, be wedge-shaped with the wedge point in the driving direction. The lower end of the harrow tine is not only with a tapered shape, but may also be envisaged to be designed as a wedge primarily pointing in the driving direction.

The harrow tine is primarily made of a rigid material like iron, steel or a material of corresponding nature. However, the harrow tine may also be made with a spring device between the point at which the harrow tine is clamped in the mounting fitting and the point located in the soil surface. Thereby is ensured that the lowermost part of the harrow tine will be deflected if the harrow tine e.g. hits a large stone in the ground. The effect of the harrow tine having such a resilient link is that the whole device may continue without the harrow tine getting stuck or trying to draw the stone along.

The spring device may, however, also be disposed between the mounting fitting and the lower side of the parallelogram by which a corresponding effect is achieved.

The described harrow tine may, however, also be a common elastic tine known for from the spring tine harrow.

The harrow tine may furthermore be envisaged consisting of two rigid parts which are connected by a spring between them. One part is mounted in the mounting fitting and the other part works in the soil. The spring will typically here be a coil spring.

A single or a plurality of the described holders may be provided in the frame transversely of the driving direction.

The soil may thereby be prepared for direct sowing without using unnecessary weight and such that the soil working machine prepares a seed bed with uniform sowing depth and with a character providing good connection between the soil and the seed corns.

The soil working tool further provides a suitable subsequent covering of the seed corns in the same work operation, giving a saving of work time as well as energy.

According to a further embodiment, the soil working tool according to the invention is peculiar in that the harrow tine is provided at the front in relation to the driving direction at the lower parallelogram side in a mounting fitting with clamping means for securing the harrow tine in a plurality of positions in vertical direction.

The harrowing depth and thus the soil working depth may thereby be varied and controlled in a simple way. The position may be determined by intervals or continuously.

The harrowing depth may hereby be adjusted such that the soil is prepared at a suitable and optimal depth depending on the combination of the -crop and the nature of the soil.

The mounting fitting entirely or partly encloses the harrow tine. In the first instance, the harrow tine is placed in the mounting fitting in that the harrow tine is inserted from one or the other opening by displacing the harrow tine in its longitudinal direction. If the mounting fitting only partially surrounds the harrow tine, the harrow tine may be inserted by moving the harrow tine in a plane primarily perpendicular to the longitudinal direction of the harrow tine.

The clamping means may be screws, clamps or similar means which can resist forces and which is made of a weather-resistant material.

The soil working tool according to the invention is thereby a simple design which compared with prior art establishes a seed bed with a uniform sowing depth without need of extra forces from weights or springs.

According to a further embodiment, the soil working tool according to the invention is peculiar in that the frame includes a first connecting means, and that the holder includes a corresponding second connecting means by which the parallelogram with the harrow tine and the roller may optionally be fastened in a raised position.

The individual parallelograms, each with a harrow tine, have a mouth for sowing and a roller that may be disposed at a lower position which is the work position itself. However, the design as a parallelogram provides for the lower side to be pivoted forward and upwards and thereby be lifted from the soil and disposed at an upper position which is called a rest or transport position.

When all parallelograms are in the raised position, the soil preparation tool may be transported without damage to the harrow tines or the surface above which the soil working tool is transported.

Also, each single parallelogram may be selected individually for application or the opposite by the given soil preparation.

The connecting means may be either a ring or a hook in the simplest design, but it may also be that the connecting means interact through e.g. a chain or a wire as these will typically be of iron or steel, but may be of a different material.

It may also be envisaged that the connecting means are a wire or a chain which is fastened by welding at one end and having a head fitting into an associated recess at the other end.

According to a further embodiment, the soil working tool according to the invention is peculiar in that the beam mounted on the frame has a plurality of equidistant pairs of pivot shafts in the driving direction in which the parallelogram may be positioned optionally.

The parallelogram may thereby be disposed at different places in longitudinal direction within the limits of the frame. By using several parallelograms in the soil working tool, these may be disposed mutually offset even if the elements from which they are made are identical.

Instead of using holes or perforations forming pivot shafts in the beam, there may be envisaged a continuous rail in which the parallelogram sides can be displaced.

The parallelogram may be envisaged suspended in a pair of wheels forming pivot shaft in holder, rod or beam provided in the driving direction, and which at the same time constitutes the upper side of the parallelogram. This holder may be equipped with a plurality of holes in longitudinal direction such that the parallelogram can be suspended at different positions and in such a way that the mouth for seed corns can be displaced in mutual relationship in the driving direction.

This design has an effect which is of significance if seeds are to be sown one by one, as seeds for larger crops are not to be put in the same position in the driving direction in two juxtaposed rows.

According to a further embodiment, the soil working tool according to the invention is peculiar in that the mounting fitting is mounted in the parallelogram via a hinge and that between the lower parallelogram side of the parallelogram and the mounting fitting there is provided a spring device.

Obstacles such as stones, branches or similar in the soil will thereby not stop or destroy the harrow tine, the parallelogram or parts of the soil working tool, but the encounter between the harrow tine and the obstacle will only result in the harrow tine being bent and moved past the obstacle.

In the first instance, the rest position for the mounting fitting with the harrow tine is such that the harrow tine preferably is perpendicular to the soil surface.

The hinge itself can be resilient or the spring may be outside the hinge.

According to a further embodiment, the soil working tool according to the invention is peculiar in that the roller has a width which is one to five times the width of the harrow tine.

Thereby is ensured that the seed bed is closed after the roller or other device intended for closing the seed bed has run over the seed bed formed by the harrow tine.

According to a further embodiment, the soil working tool according to the invention is peculiar in that in front of each roller a seed pipe is disposed with an outlet at a position at or above the level of the horizontal plane of the lowermost point on the harrow tine.

Between the harrow tine and roller, wheel or other chosen device, a mouth is provided with the object of laying seed corns in the hole. The design of the mouth is such that the width of he opening itself is less than the width of the harrow tine, but otherwise adjusted to the width such that seed corns, whether sowing continuously with seeds or placing seeds one by one, fall down into the hole at the desired sowing depth.

According to a further embodiment, the soil working tool according to the invention is peculiar in that the seed pipe consists of at least two telescoping pipes, and that the outlet is disposed immediately after the harrow tine.

A seed hopper is provided on the frame itself and is typically designed such that the hopper tapers downwardly. The seed corn is thereby gathered in a point or a stripe from where the seed corn is conducted from the hopper to the mouth or immediately above the soil. The guides or channels for seed corn are typically hoses or tubes. In a preferred embodiment, there is provided an outer tube and an inner tube which may be displaced in longitudinal direction of the pipe like a telescope. The parallelogram suspension may thereby be disposed at different positions in the holders disposed in the driving direction in the frame. It is envisaged that the seed corn is conducted from the telescoping part to the outlet by a bent tube or hose.

Thereby it is ensured that the distance from a hopper with seed corn to the place where the seed corn is to be delivered can be varied.

According to a further embodiment, the soil working tool according to the invention is peculiar in that a compacting roller is mounted on the frame.

The soil working tool may thereby be used to prepare the soil in one work operation into having a uniform surface by which more uniform crops are ensured, which is optimal.

The compacting roller can be disposed at front of the frame or at the rear of the frame.

If the compacting roller is disposed at the front, it will then ensure that the harrow tines receive a more uniform soil surface to be broken. Moreover, the compacting roller will here act as support for the frame with the parallelograms.

Irrespective of the position of the compacting roller, its rolling or soil compacting function is primarily the same. The compacting roller here consists of a double pipe roller system but the choice may be on other types like e.g. an oblong hole or a solid cylinder.

The advantage appears in that the soil working tool with compacting roller ensures a work saving and simple procedure as preparation as well as sowing itself and closing the seed bed is effected in one work operation. In that way not only work time is saved, but also fuel.

According to a further embodiment, the soil working tool according to the invention is peculiar in that the roller is mounted on an arm which is mounted on the lower parallelogram side via a pivot shaft, and that between the arm and the lower parallelogram side there is provided an adjusting mechanism for positioning the roller at a desired position relative to the lower parallelogram side.

By this embodiment it becomes possible to further vary the distance from the parallelogram to the surface.

The arm may have fixed length, but it may also be an actuator, hydraulic or pneumatic, such that the position of the roller can be further displaced. Moreover, the arm may be provided with a spring such that impacts on the roller are absorbed.

Finally, the arm may be designed such that the roller may easily be replaced by e.g. a wheel or other device for closing the seed bed.

The adjusting mechanism may be a perforated plate with a plurality of holes disposed at different distances, such that the arm can be secured at different positions in that a bolt or cotter pin is placed through a hole in the arm and a given hole.

The perforated plate may also be substituted by a plate with slots such that the position of the arm can be continuously varied.

### Description of the Drawing

In the following, the invention will be explained in more detail with reference to the enclosed drawings wherein:
- Fig. 1: shows a perspective view of elements of a soil working tool consisting of tow bar, harrow, hopper for seed corn and compactor;
- Fig. 2: shows a perspective view of frame with soil working tool with a harrow tine at the front of parallelogram;
- Fig. 3: shows frame and parallelograms with harrow tine in raised and lowered conditions;
- Fig. 4: shows the frame and several parallelograms and hopper for seed corn, pipe for conveying seed corn and discharge of seed corn. Furthermore, the final compacting roller is seen;
- Fig. 5: shows an embodiment of parallelogram where between the roller and lower parallelogram there is inserted an arm and where a spring tine is used;
- Fig. 6A: shows a work vehicle towing the soil working tool in a transport position;
- Fig. 6B: shows a work vehicle towing the soil working tool in a work position; and
- Fig. 7: shows a work vehicle towing the soil working tool in a preferred embodiment with a compacting roller, hopper for seed corn and a plurality of seed pipes, each connected to a parallelogram with a harrow tine. The soil working tool is supported by support wheels.

### Detailed Description of Embodiments of the Invention

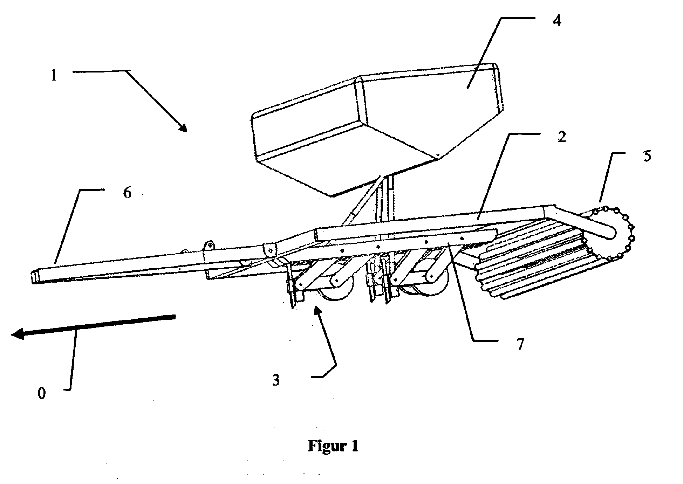

Fig. 1 shows a perspective view of a soil working tool 1 having a frame 2, in which frame 2 is mounted a holder 7 including a parallelogram 3 and fitted with a seed hopper 4 and a compacting roller 5. The soil working tool is towed in a driving direction 0 via a coupling means 6.

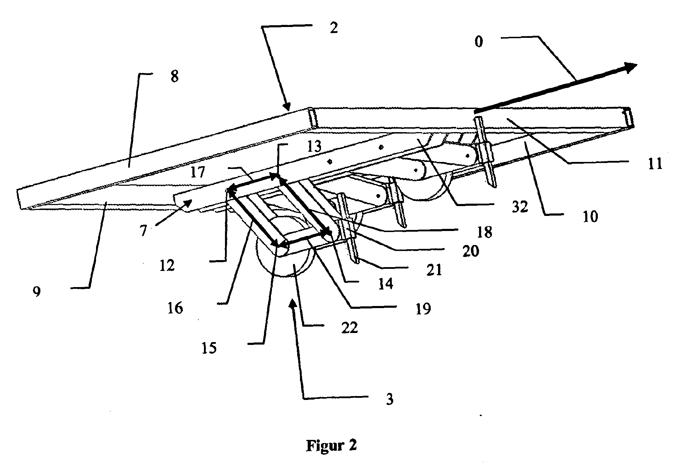

Fig. 2 shows a perspective view of the frame 2 which is drawn in driving direction 0, which frame 2 consisting of a front side 11, a rear side 9, and a right side 8 and a left side 10 as seen from the rear side 9. In the following, an example of the holder 7, which is central in the invention and includes the parallelogram 3 and a beam 32 extending longitudinally relative to the frame 2, the beam 32 mounted on the front side 11 and rear side 9 of the frame.

The holder 7 includes the parallelogram 3 and a longitudinal beam 32 which is equipped with a pair of upper pivot shafts 12, 13 that are arbitrarily disposed on a line in its longitudinal direction. The upper pivot shafts 12, 13 act as upper axes of the two pivotable parallelogram sides 16, 18 of the parallelogram 3, which are rigid plates, where there is a rear parallelogram side 16 and a front parallelogram side 18 relative to the driving direction 0. The two pivotable parallelogram sides 16, 18 are coupled by a lower parallelogram side 19 through a pair of lower pivot shafts 14, 15. The distance between the upper pivot shafts 12, 13 is identical to the distance between the lower pivot shafts 14, 15, as well as the distance between the pivot shafts 12, 15 coordinating with the rear parallelogram side 16 and the distance between the pivot shafts 13, 14 coordinating with the front parallelogram side 18 are identical.

Thereby is formed the parallelogram 3 as an upper parallelogram side 17 is part of the beam 32 which is defined by the piece between the upper pivot shafts 12 and 13.

The parallelogram side 19 of the parallelogram 3 is provided at the front edge with a mounting fitting 20 in which a harrow tine 21 is provided. The pivot shaft 15 also functions as support for a roller 22.

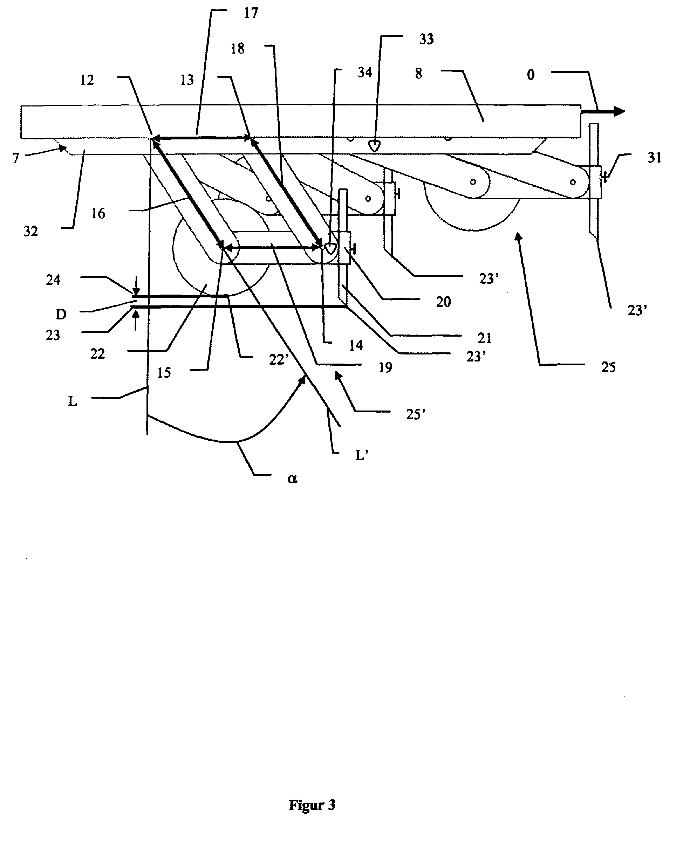

Fig. 3 shows a section of the perspective of Figure 2. Compared with Fig. 2, there are following details.

From the rearmost, upper pivot shaft 12 is defined a vertical line L from which is formed a parallelogram angle to a line L' going through the pivot shafts 12 and 15. The parallelogram angle is positively defined by swinging the line L' from vertical L in the direction of driving 0.

The soil working tool 1 works with positive parallelogram angles α.

The harrow tine 21 is clamped in the mounting fitting 20 by means of a clamp 31. For a given parallelogram angle, the harrow tine 21 will have a lower point 23' which forms a harrowing plane 23. For the same given parallelogram angle, the roller 22 will have a lower point 22' which forms a surface plane 24. Between the harrowing plane 23 and the surface plane 24 there is a distance which is a harrowing depth D.

The harrowing depth D may be adjusted in that the harrow tine 21 is displaced in primarily vertical direction in the mounting fitting 20.

The parallelogram 3 may be in two extreme positions relative to the frame 2: A raised position 25 or a lowered position 25'. In the raised position 25, a first connecting means 33 interacts with a second connecting means 34, and in the lowered position 25, the first connecting means 33 is released from the second connecting means 34.

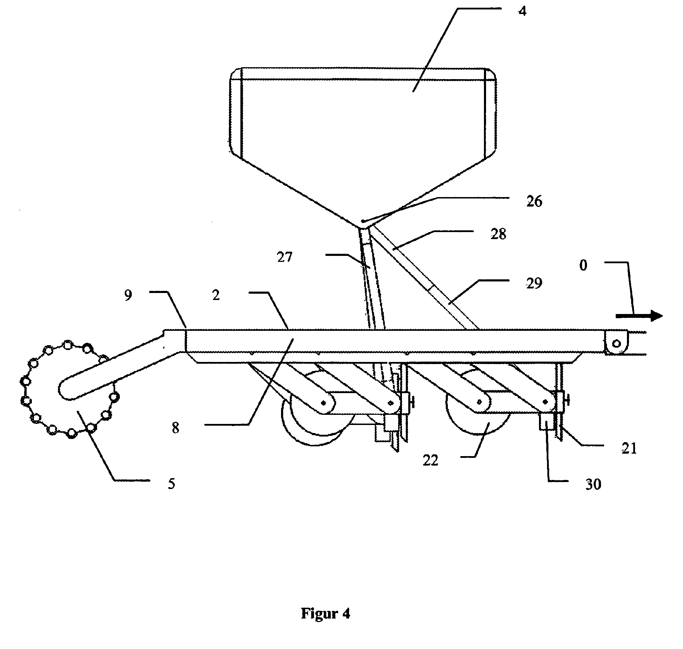

Fig. 4 shows a part of the frame 2 and a hopper 4 for seed corn, the hopper 4 having a shape ending around a lower hopper axis 26 about which a plurality of seed pipes 27 for conveying seed corn initiate. These seed pipes 27 consist of an upper guide 28 and a lower guide 29 which may be displaced in relation to each other in their longitudinal direction, e.g. telescopically, such that they may conduct seed corn. The seed pipes 27 terminate in a seed outlet 30 which is seen disposed immediately after the harrow tine 21 and before the roller 22 relative to the driving direction 0.

The compacting roller 5 is here mounted on the frame 2 at the rear side relative to the driving direction 0.

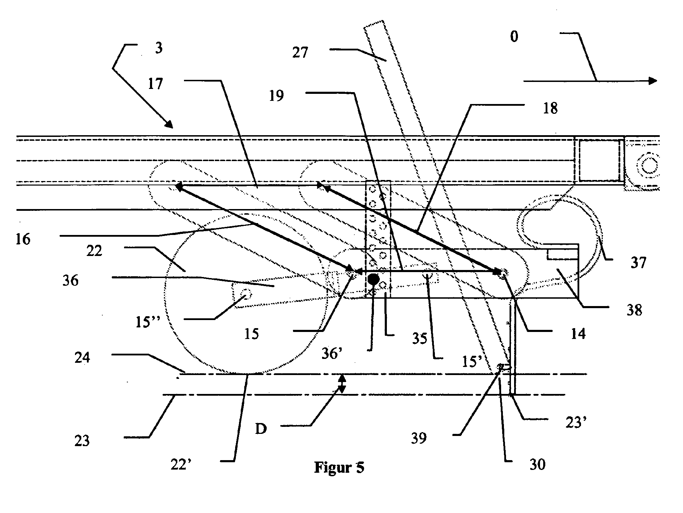

Fig. 5 shows an alternative design around the parallelogram 3 with the parallelogram sides 16,17,18,19. In this design, a perforated plate 35 is fastened on a lower parallelogram side 19.

In the lower parallelogram side 19 between the pivot shafts 14 and 15 there is an additional lower pivot shaft 15' around which an arm 36 interacts. The other end of the arm 36 has a shaft 15" interacting with the centre axle of the roller 22.

The position of the roller 22 relative to the parallelogram 3 is determined by the arm 36 being locked relative to the perforated plate 35 by means of a bolt 36' which goes through the arm 36 as well as a hole in the perforated plate 35.

The lower parallelogram side 19 is extended in the driving direction 0 by a mounting piece 38 upon which a spring tine 37 is mounted. The lower end of the spring tine 37 coordinates with seed pipe 27 through a fastening arrangement 39 such that the seed pipe 30 is immediately behind the spring tine 37 as seen in the driving direction 0.

The lower point 23' of the spring tine 37 defines the harrowing plane 23. The lower point 22' of the roller 22 defines the surface plane 24. Between the harrowing plane 23 and the surface plane 24 there is a distance which is the harrowing depth D.

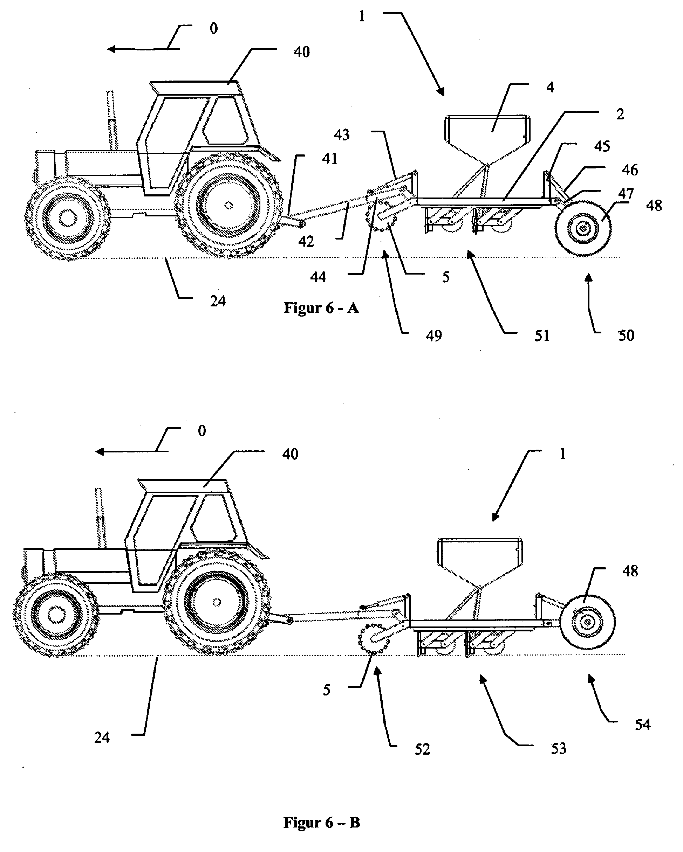

Fig. 6A shows the soil working tool 1 coupled to a work vehicle 40. The coupling operation is effected by a work vehicle coupling 41 which is optionally coupled or uncoupled a coupling rod 42 interacting displaceably with a rotatable coupling arrangement 44 on the soil working tool 1. The rotatable coupling arrangement 44 also interacts with a coupling actuator 43 which is fastened to the frame 2.

At the rearmost end of the frame 2 in relation to the driving direction 0, a support arrangement 45 is mounted which coordinates with one end of a support actuator 46, where the other end of which is mounted on a support rod 47, one end of which rotatably mounted on the frame 2 and the other end of which forming an axle for a support wheel 48.

Here in Fig. 6A, the soil working tool 1 is seen in a transport position 51 where the compacting roller 5 is in a raised position 49, and where the support wheel 48 is in a lowered position 50.

Fig. 6B shows the soil working tool 1 in a work position 53 where the compacting roller 5 is in a lowered position 52, and where the support wheel is in a raised position 54.

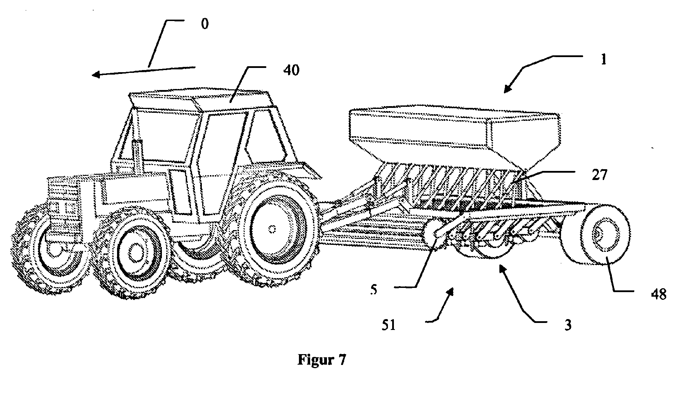

Fig. 7 shows the work vehicle 40 towing the soil working tool 1 in the driving direction 0. The soil working tool 1 is seen mounted on the compacting roller 5 and a plurality of parallelograms 3 each receiving seed corn from a plurality of seed pipes 27.

The soil working tool 1 is in the transport position 51 as the support wheel 48 is down and the compacting roller 5 is up.

## Claims

1. A soil working tool (1) with a frame (2) having coupling means (6) for a work vehicle (40), and which supports a number of harrow tines (21), at which every harrow tine (21) is mounted in the frame (2) via a holder (7) which includes a beam (32) secured to the frame (2), and which includes a parallelogram (3) with four parallelogram sides (16, 17, 18, 19) that are mutually articulated (12,13,14,15), and a mounting fitting (20) fastened at a lower parallelogram side (19), at which an upper parallelogram side (17) is constituted by a part of the beam (32), at which a lower parallelogram side (19) is largely horizontal in use, and at which the lower parallelogram side (19) is mounted in two parallelogram sides (16,18), wherein the lower parallelogram side (19) further supports a roller (22), and wherein the harrow tine (21) has at least one work position (53) where a lower point (23') of the harrow tine (21) is located in a horizontal harrowing plane (23) which is under a horizontal surface plane (24) of the lowermost point (22') of the roller (22), **characterised in that** the two parallelogram sides (16, 18) are directed obliquely upwards and rearwards in relation to the driving direction (0) of the soil working tool (1).

2. Soil working tool according to claim 1, **characterised in that** the harrow tine (21) is provided at the front in relation to the driving direction (0) at the lower parallelogram side (19) in a mounting fitting (20) with clamping means (31) for securing the harrow tine in a plurality of positions in vertical direction.

3. Soil working tool according to claim 1 or 2, **characterised in that** the frame (2) includes a first connecting means (33), and that the holder (7) includes a corresponding second connecting means (34) by which the parallelogram (3) with the harrow tine (21) and the roller (22) may optionally be fastened in a raised position (25).

4. Soil working tool according to any preceding claim, **characterised in that** the beam (32) mounted on the frame (2) has a plurality of equidistant pairs of pivot shafts (12, 13) in the driving direction (0) in which the parallelogram (3) may be positioned optionally.

5. Soil working tool according to any preceding claim, **characterised in that** the mounting fitting is mounted in the parallelogram (3) via a hinge and that between the lower parallelogram side (19) of the parallelogram (3) and the mounting fitting (20) there is provided a spring device.

6. Soil working tool according to any preceding claim, **characterised in that** the roller (22) has a width which is one to five times the width of the harrow tine (21).

7. Soil working tool according to any preceding claim, **characterised in that** that in front of each roller (22) a seed pipe (27) is disposed with an outlet (30) at a position at or above the level of the horizontal plane (23) of the lowermost point (23') on the harrow tine (21).

8. Soil working tool according to claim 6, **characterised in that** the seed pipe (27) consists of at least two telescoping displaceable pipes (28, 29), and that the outlet (30) is disposed immediately after the harrow tine (21).

9. Soil working tool according to any preceding claim, **characterised in that** a compacting roller (5) is mounted on the frame (2).

10. Soil working tool according to any preceding claim, **characterised in that** the roller (22) is mounted on an arm (36) which is mounted on the lower parallelogram side (19) via a pivot shaft (15'), and that between the arm (36) and the lower parallelogram side (19) there is provided an adjusting mechanism (35, 36') for positioning the roller (22) at a desired position relative to the lower parallelogram side (19).

## Patentansprüche

1. Bodenbearbeitungsgerät (1), das einen Rahmen (2) mit Kupplungsmitteln (6) für einem Arbeitsfahrzeug (40) aufweist, und das eine Vielzahl von Eggezinken (21) unterstützt, wobei jede Eggezinke (21) durch eine Halterung (7), die einen zum Rahmen (2) befestigten Balken (32) umfasst, im Rahmen (2) angeordnet ist, und der ein Parallelogramm (3) mit vier gegenseitig artikulierten (12, 13, 14, 15) Parallelogrammseiten (16, 17, 18, 19) umfasst, und ein an einer unteren Parallelogrammseite (19) befestigtes Anschlussstück (20), wobei eine obere Parallelogrammseite (17) von einem Teil des Balkens (32) gebildet wird, wobei eine untere Parallelogrammseite (19) im Gebrauch im wesentlichen waagerecht ausgerichtet ist, und wobei die untere Parallelogrammseite (19) in zwei Parallelogrammseiten (16, 18) angeordnet ist, wobei die untere Parallelogrammseite (19) weiter eine Walze (22) unterstützt, und wobei die Eggezinke (21) wenigstens eine Arbeitsposition (53) einnehmen kann, wobei ein unterer Punkt (23') der Eggezinke (21) in einer waagerechten, unter einer waagerechten Ebene (24) des untersten Punktes (22') der Walze befindlichen Eggetiefe (23) liegt, **dadurch gekennzeichnet, dass** die zwei Parallelogrammseiten (16, 18) relativ zur Fahrtrichtung (0) des Erdbearbeitungsgeräts (1) schräg aufwärts und nach hinten gerichtet sind.

2. Bodenbearbeitungsgerät nach Anspruch 1, **dadurch gekennzeichnet, dass** die Eggezinke (21) zum Festhalten der Eggezinke in einer Vielzahl von Positionen in senkrechter Richtung im Anschlussstück (20) mit einer Klemmvorrichtung (31) an der Stirnseite relativ zur Fahrtrichtung (0) an der unteren Parallelogrammseite (19) angeordnet ist.

3. Bodenbearbeitungsgerät nach Anspruch 1 oder 2, **dadurch gekennzeichnet, dass** der Rahmen (2) erste Anschlussmittel (33) umfasst, und dass die Halterung (7) entsprechende zweiten Anschlussmittel (34) umfasst, mittels derer das Parallelogramm (3) mit der Eggezinke (21) und der Walze (22) wahlfrei in einer erhobenen Position (25) befestigbar ist.

4. Bodenbearbeitungsgerät nach irgendeinem der vorhergehenden Ansprüche, **dadurch gekennzeichnet, dass** der am Rahmen (2) befestigte Balken (32) eine Vielzahl von äkvidistanten Paaren von Gelenkbolzen (12, 13) in der Fahrtrichtung (0) aufweist, worin das Parallelogramm (3) wahlfrei positionierbar ist.

5. Bodenbearbeitungsgerät nach irgendeinem der vorhergehenden Ansprüche, **dadurch gekennzeichnet, dass** das Anschlussstück durch ein Gelenk im Parallelogramm (3) angeordnet ist, und dass zwischen der unteren Parallelogrammseite (19) des Parallelogramms (3) und dem Anschlussstück (20) eine Federvorrichtung angeordnet ist.

6. Bodenbearbeitungsgerät nach irgendeinem der vorgehenden Ansprüche, **dadurch gekennzeichnet, dass** die Walze (22) eine Breite von ein bis vier Mal der Breite der Eggezinke (21) aufweist.

7. Bodenbearbeitungsgerät nach irgendeinem der vorhergehenden Ansprüche, **dadurch gekennzeichnet, dass** vor jeder Walze (22) ein Samenkornrohr (27) mit einem Auslass (30) in einer Position an der oder oberhalb der waagerechten Ebene (23) des untersten Punktes (23') der Eggezinke (21) vorgesehen ist.

8. Bodenbearbeitungsgerät nach Anspruch 6, **dadurch gekennzeichnet, dass** das Samenkornrohr (27) aus wenigstens zwei teleskopisch verschiebbaren Rohren (28, 29) besteht, und dass der Auslass (30) unmittelbar hinter der Eggezinke (21) angeordnet ist.

9. Erdbearbeitungsgerät nach irgendeinem der vorhergehenden Ansprüche, **dadurch gekennzeichnet, dass** eine Verdichtungswalze (5) am Rahmen (2) angeordnet ist.

10. Bodenbearbeitungsgerät nach irgendeinem der vorhergehenden Ansprüche, **dadurch gekennzeichnet, dass** die Walze (22) an einem durch einen Gelenkbolzen (15') auf der unteren Parallelogrammseite (19) befestigten Arm (36) angeordnet ist, und dass ein Verstellorgan (35, 36') zum Positionieren der Walze (22) in einer beliebigen Position relativ zu der unteren Parallelogrammseite (19) zwischen dem Arm (36) und der unteren Parallelogrammseite (19) angeordnet ist.

## Revendications

1. Outil de travail du sol (1) avec un châssis (2) ayant des moyens de couplage (6) pour un véhicule de travail (40), et supportant un nombre de dents de herse (21), sur lequel chaque dent de herse (21) est montée sur le châssis (2) par un support (7) comprenant une poutre (32) fixée au châssis (2), et comprenant un parallélogramme (3) avec quatre côtés de parallélogramme (16, 17, 18, 19) qui sont articulés entre eux (12,13,14,15), et un moyen de fixation (20) fixé à un côté de parallélogramme inférieur (19), sur lequel un côté de parallélogramme supérieur (17) est constitué par une partie de la poutre (32), sur lequel un côté de parallélogramme inférieur (19) est largement horizontal en usage, et sur lequel le côté de parallélogramme inférieur (19) est monté dans deux côtés de parallèlogramme (16,18), dans lequel le côté de parallélogramme inférieur (19) supporte en plus un rouleau (22), et dans lequel la dent de herse (21) peut occuper au moins une position de travail (53) où un point inférieur (23') de la dent de herse (21) est situé dans un plan de hersage horizontal (23) se trouvant au dessus d'un plan de surface horizontal (24) du point le plus bas (22') du rouleau (22), **caractérisé en ce que** les deux côtés de parallélogramme (16, 18) sont orientés obliquement vers le haut et vers l'arrière par rapport au sens d'avance (0) de l'outil de travail du sol (1).

2. Outil de travail du sol selon la revendication 1, **caractérisé en ce que** la dent de herse (21) est réalisée à l'avant par rapport au sens d'avance (0) au côté de parallélogramme inférieur (19) dans un moyen de fixation (20) avec des moyens de serrage (31) pour fixer la dent de herse dans plusieurs positions dans le sens vertical.

3. Outil de travail du sol selon la revendication 1 ou 2, **caractérisé en ce que** le châssis (2) comprend un premier moyen de connection (33), et que le support (7) comprend un deuxième moyen de connection correspondant (34) par lequel le parallélogramme (3) avec la dent de herse (21) et le rouleau (22) peut être fixé dans une position levée.

4. Outil de travail du sol selon l'une quelconque des revendications précédentes, **caractérisé en ce que** la poutre (32) montée sur le châssis (2) comprend une pluralité de paires équidistantes d'arbres pivots (12, 13) dans le sens d'avance (0) dans lesquels le parallélogramme (3) peut être positionné en option.

5. Outil de travail du sol selon l'une quelconque des revendications précédentes, **caractérisé en ce que** le moyen de fixation est monté dans le parallélogramme (3) par une charnière et qu'il est prévu entre le côté de parallélogramme inférieur (19) du parallélogramme (3) et le moyen de fixation (20) un dispositif de ressort.

6. Outil de travail du sol selon l'une quelconque des revendications précédentes, **caractérisé en ce que** le rouleau (22) a une largeur qui est de un à cinq fois la largeur de la dent de herse (21).

7. Outil de travail du sol selon l'une quelconque des revendications précédentes, **caractérisé en ce que** devant chaque rouleau (22) est disposé un tube de semence (27) avec une sortie (30) dans une position égale ou supérieure au niveau du plan horizontal (23) du point le plus bas (23') sur la dent de herse (21).

8. Outil de travail du sol selon la revendication 6, **caractérisé en ce que** le tube de semence (27) comprend au moins deux tubes télescopiques déplaçables (28, 29), et que la sortie (30) est disposée immédiatement après la dent de herse (21).

9. Outil de travail du sol selon l'une quelconque des revendications précédentes, **caractérisé en ce qu'**un rouleau packer (5) est monté sur le châssis (2).

10. Outil de travail du sol selon l'une quelconque des revendications précédentes, **caractérisé en ce que** le rouleau (22) est monté sur un bras (36) monté sur le côté de parallélogramme inférieur (19) par un arbre pivot (15'), et qu'il est prévu entre le bras (36) et le côté de parallélogramme inférieur (19) un mécanisme de réglage (35, 36') pour un positionnement du rouleau (22) souhaité par rapport au côté de parallélogramme inférieur (19).
